Europäisches Patentamt

European Patent Office

Office européen des brevets

(19)

(11) Veröffentlichungsnummer : **0 158 032**
**B1**

(12)

# EUROPÄISCHE PATENTSCHRIFT

(45) Veröffentlichungstag der Patentschrift :
05.04.89

(21) Anmeldenummer : 85101415.9

(22) Anmeldetag : 11.02.85

(51) Int. Cl.⁴ : **A 47 J 43/046**, A 47 J 43/06

(54) **Elektrisch betriebenes Gerät für die Bearbeitung und Zubereitung von Nahrungsmitteln aller Art.**

(30) Priorität : 09.03.84 DE 3408692

(43) Veröffentlichungstag der Anmeldung :
16.10.85 Patentblatt 85/42

(45) Bekanntmachung des Hinweises auf die Patenterteilung : 05.04.89 Patentblatt 89/14

(84) Benannte Vertragsstaaten :
DE FR GB IT NL

(56) Entgegenhaltungen :
EP--A-- 0 081 874
CH--A-- 375 113
FR--A-- 2 358 576
FR--A-- 2 442 034
US--A-- 3 369 583
US--A-- 4 095 751
US--A-- 4 113 188
US--A-- 4 373 677

(73) Patentinhaber : ROBERT KRUPS STIFTUNG & CO.
KG.
Heresbachstrasse 29
D-5650 Solingen 19 (DE)

(72) Erfinder : Henn, Stefan, Dipl.-Ing.
Wieden 29
D-5650 Solingen 1 (DE)

(74) Vertreter : Buse, Karl Georg, Dipl.-Phys. et al
Patentanwälte Dipl.-Phys. Buse Dipl.-Phys. Mentzel
Dipl.-Ing. Ludewig Unterdörnen 114 Postfach 20 02 10
D-5600 Wuppertal 2 (DE)

EP 0 158 032 B1

## Beschreibung

Die Erfindung bezieht sich auf ein elektrisch betriebenes Gerät für die Bearbeitung und Zubereitung von Nahrungsmitteln aller Art, mit einem Gehäuse zur Unterbringung des Elektromotors und von zugehörigen Schalt- und Steuereinrichtungen, mit einer vom Elektromotor antreibbaren Arbeitswelle, deren oberes Ende in einen beidseitig offenen, hülsenartigen Vorsprung am Boden des Aufnahmebehälters hineinragt und mit dem eine Isolierhülse fest verbunden ist, die der lösbaren Aufnahme eines Arbeitswerkzeuges dient, mit einem den Aufnahmebehälter verschließbaren Deckel, dem eine Sicherheitseinrichtung zugeordnet ist.

Ein derartiges Gerät ist aus der US-A-4 373 677 bekannt. Bei einer bekannten Ausführungsform eines solchen elektrisch betriebenen Gerätes zum Bearbeiten und Zubereiten von Nahrungsmitteln aller Art ist auf die im Querschnitt unrund gehaltene Isolierhülse ein Arbeitswerkzeug, wie ein Messer, unmittelbar aufgesteckt. Zu diesem Zweck hat die Nabe des Arbeitswerkzeuges auf ihrer einen Seite eine hohlkörperartige Verlängerung, die die Isolierhülse übergreift. Auf der gegenüberliegenden anderen Seite weist die Nabe des Arbeitswerkzeuges eine plattenförmig gestaltete Handhabe auf, mit der ein Herausnehmen oder ein Einsetzen des Arbeitswerkzeuges aus bzw. in den Aufnahmebehälter erfolgen kann.

Diese bekannte Ausführungsform eines elektrisch betriebenen Gerätes zum Bearbeiten und Zubereiten von Nahrungsmitteln setzt die Verwendung eines sperrigen und voluminösen Arbeitswerkzeuges voraus, das nur komplett aus dem Aufnahmebehälter herausgenommen werden kann. Dies ist insbesondere dann nachteilig, wenn das elektrisch betriebene Gerät zum Bearbeiten und Zubereiten von Nahrungsmitteln mehrere Werkzeuge aufweist, weil diese stets jedes für sich eine sperrige, viel Platz einnehmende Ausbildung haben müssen.

Der Erfindung liegt die Aufgabe zugrunde, elektrisch betriebene Geräte für die Bearbeitung und Zubereitung von Nahrungsmitteln aller Art der eingangs näher beschriebenen Art unter Vermeidung der genannten Nachteile bekannter Ausführungsformen zu verbessern. Dabei wird von der Erkenntnis ausgegangen, daß es zur Bearbeitung und Zubereitung von Nahrungsmitteln keineswegs erforderlich ist, die Arbeitswerkzeuge des Gerätes sperrig und voluminös zu gestalten sondern daß man mit wesentlich kleiner dimensionierten Arbeitswerkzeugen auskommt, wenn man eine andere als die direkte Verbindung des Arbeitswerkzeuges mit der Isolierhülse wählt.

Dieses Ziel ist erfindungsgemäß dadurch gelöst, daß mit der Isolierhülse abnehmbar ein Adapter auf Mitnahme gekuppelt ist, der wenigstens auf einem Teilbereich seiner Umfangsfläche Gegenkupplungen aufweist und daß dem Adapter eine Mehzahl von Werkzeugen, wie Knetwerkzeug, Messer, Sahnescheibe od. dgl. zugeordnet ist, die ihrerseits jeweils Kupplungen aufweisen, die mit den Gegenkupplungen zusammenwirken, wenn wahlweise eines der Arbeitswerkzeuge mit dem Adapter lösbar verbindbar ist.

Durch die erfindungsgemäße Ausbildung eines elektrisch betriebenen Gerätes für das Bearbeiten und Zubereiten von Nahrungsmitteln ergeben sich gegenüber dem Bekannten erhebliche Vorteile. Der zwischen die Isolierhülse und das Arbeitswerkzeug geschaltete Adapter kann auf der Isolierhülse verbleiben, wenn man die Arbeitswerkzeuge gegeneinander austauschen will. Es ist also nicht mehr erforderlich, bei jedem Arbeitswerkzeugwechsel den Adapter aus dem Aufnahmebehälter zu entfernen. Trotzdem ist es möglich, bedarfsweise, beispielsweise zum Reinigen des Gerätes, diesen von der Isolierhülse abzunehmen.

Das Auswechseln der Arbeitswerkzeuge vom Adapter gestaltet sich außerordentlich einfach, so daß der Benutzer mit wenigen Handgriffen das im Aufnahmebehälter befindliche Arbeitswerkzeug gegen ein anderes austauschen kann. Dabei ist es von weiterem Vorteil, daß die benutzten Arbeitswerkzeuge, wie Knetwerkzeug, Messer, Sahnescheibe od. dgl. wesentlich kleiner dimensioniert sind als bei den bekannten Ausführungsformen. Dies macht sich auch bei der Lagerung und beim Transport vorteilhaft bemerkbar.

Bei der bevorzugten Ausführungsform der Erfindung weist die Isolierhülse an ihrer Umfangsfläche liegende Kupplungsvorsprünge auf, die mit Gegenkupplungen an der Innenwand eines inneren Teilstückes des Adapters formschlüssig kuppelbar sind.

Dabei ist es zweckmäßig, daß in Draufsicht gesehen die Kupplungsvorsprünge der Isolierhülse und die Gegenkupplungen des Adapters eine wellen- oder zahnradförmige, sich zu einem Kreis ergänzende Fläche einschließen, wobei in die Wellentäler bzw. Zahnlücken die Gegenkupplungen des inneren Teilstückes des Adapters bzw. die Kupplungen eines der Arbeitswerkzeuge formschlüssig eingreifen. Durch diese Ausbildung der Kupplungen und Gegenkupplungen wird eine außerordentlich wirksame Kraftübertragung zwischen den zusammenwirkenden Teilen erreicht, vor allem weil die Kraftangriffsflächen im wesentlichen senkrecht aufeinander stehen.

Zweckmäßig ist es, die Kupplungsvorsprünge, die Gegenkupplungen und die Kupplungen jeweils untereinander gleich zu gestalten und sie in regelmäßiger Anordnung an der Isolierhülse, am Adapter und an den Werkzeugen anzuordnen und sie in Richtung der Längsachsen dieser Teile verlaufen zu lassen. Dadurch ergibt sich eine gleichmäßige, über den Umfang der zusammenwirkenden Elemente verteilte Kraftübertragung.

In Sonderfällen ist es aber auch möglich, die Kupplungsvorsprünge, die Gegenkupplungen und die Kupplungen zwar wieder — wie angegeben — untereinander gleich zu gestalten und sie auch in regelmäßiger Anordnung an der Isolierhülse, am Adapter und an den Werkzeugen anzuordnen, jedoch ist in diesem Falle vorgesehen, die Richtungen der Kupplungsvorsprünge, der Gegenkupplungen und der Kupplungen geneigt zu den Längsachsen von Isolierhülse, Adapter und den Arbeitswerkzeugen verlaufen zu lassen.

Es empfiehlt sich, die Arbeitswerkzeuge jeweils einen mit einem schulterförmigen Absatz des Adapters zusammenwirkenden Auflagerand aufweisen zu lassen. Hierdurch werden zunächst Mittel geschaffen, die die Lage des jeweils benutzten Arbeitswerkzeuges im Bezug auf den Boden des Aufnahmebehälters festlegen. Beispielsweise kann man den Absatz, mit dem der Auflagerand zusammenwirkt, so anordnen, daß das Messer mit seinem einen Flügel unmittelbar der Oberfläche des Bodens des Aufnahmebehälters benachbart ist. Auf der anderen Seite dienen im gegenseitigen Zusammenwirken der schulterförmige Absatz des Adapters und der Auflagerand der Arbeitswerkzeuge dazu, das Arbeitswerkzeug zusammen mit dem Adapter aus dem Aufnahmebehälter herauszuführen. In diesem Falle haben die genannten Teile Mitnehmerfunktion.

Bei der bisher geschilderten erfindungsgemäßen Ausbildung des Adapters sind die zugeordneten Arbeitswerkzeuge, wie Knetwerkzeug, Messer, Sahnescheibe od. dgl. alle im unteren Bereich des Aufnahmebehälters wirksam. In diesem Falle genügt es, wenn der Adapter nur etwas länger gehalten ist als die Isolierhülse, mit der er zusammenwirkt.

Abweichend davon ist es aber auch möglich, den erfindungsgemäßen Adapter so zu gestalten, daß er auch mit solchen Arbeitswerkzeugen zusammenwirken kann, die im Bereich des Deckels des Aufnahmebehälters benutzt werden, um das durch einen Einfüllstutzen des Deckels zugeführte Nahrungsmittel zu bearbeiten, vorzugsweise zu zerkleinern. Um dieses zu erreichen, weist nach einem anderen Vorschlag der Erfindung der Adapter eine in Richtung des Deckels des Aufnahmebehälters weisende Verlängerung auf, deren Umfangsfläche wenigstens bereichsweise mit Gegenkupplungen versehen ist.

Für das Zusammenwirken der Arbeitswerkzeuge im oberen Bereich des Aufnahmebehälters mit der Verlängerung des Adapters bieten sich zwei Möglichkeiten an. Nach der ersten Möglichkeit erfolgt ein unmittelbares Zusammenwirken der Kupplungen eines Arbeitswerkzeuges mit den Gegenkupplungen der Verlängerung des Adapters. Die zweite Möglichkeit sieht demgegenüber eine mittelbare Verbindung zwischen diesen Teilen vor, indem nämlich ein separater Werkzeugträger benutzt wird, dessen Kupplungen mit den Gegenkupplungen der Verlängerung des Adapters zusammenwirken.

Sofern von der letztgenannten Möglichkeit Gebrauch gemacht wird, empfiehlt es sich, den einstückig ausgebildeten Werkzeugträger eine Nabe aufweisen zu lassen, die von einer Bohrung zum Eingriff wenigstens des vorderen Endes der Verlängerung des Adapters durchsetzt ist und an ihren Innenwandungen die Kupplungen aufweist und daß der Werkzeugträger wahlweise eines von mehreren unterschiedlich gestalteten Arbeitswerkzeugen, wie Raspelscheibe, Parmesanscheibe od. dgl. aufnimmt. Die Anordnung der Arbeitswerkzeuge auf dem Werkzeugträger ist dabei so getroffen, daß sie in unmittelbarer Nähe der Einmündungsöffnung des Einfüllstutzens in den Aufnahmebehälter zu liegen kommen. Dabei können an sich bekannte Vorkehrungen getroffen werden, die ein Abtrennen von unterschiedlich dicken Scheiben von dem durch den Einfüllstutzen des Deckels zugeführten Nahrungsmitteln gewährleisten.

Es empfiehlt sich, den Werkzeugträger einen Rand aufweisen zu lassen, der von einer Verlängerung des Arbeitswerkzeuges untergriffen wird und das Arbeitswerkzeug einen Durchbruch besitzen zu lassen, dessen umlaufender Kragen mit dem vorderen freien Ende der Verlängerung des Adapters zusammenwirkt.

Hinsichtlich der längenmäßigen Dimensionierung der Verlängerung des Adapters ergeben sich mehrere Möglichkeiten. Nach einem ersten Vorschlag der Erfindung endet die Verlängerung vor der unteren Begrenzungswand des Deckels des Aufnahmebehälters. In diesem Falle liegt eine einseitige Lagerung des Adapters vor. Man kann aber auch eine zweifache Lagerung für den Adapter wählen, beispielsweise dann, wenn die auftretenden Kräfte beim bestimmungsgemäßen Gebrauch des Gerätes verhältnismäßig groß sind.

Zur Erzielung einer solchen zweifachen Lagerung weist nach einem weiteren Vorschlag der Erfindung die Verlängerung des Adapters eine nach oben offene Bohrung zum Eingriff des vorderen Endes eines Lagerstiftes auf, der seinerseits in einem Lager des Deckels des Aufnahmebehälters untergebracht ist. Das Lager für den Lagerstift kann durch eine einfache bereichsweise Verdickung der Wandung des Deckels gebildet werden. Das Abnehmen oder Aufsetzen des Deckels vom Aufnahmebehälter wird durch eine solche zweifache Lagerung des Adapters nicht beeinträchtigt, denn einmal kann der am Deckel befindliche Lagerstift ohne Schwierigkeiten von oben her in die Bohrung der Verlängerung des Adapters eingeführt werden. Zum anderen wird eine symmetrische Anordnung, insbesondere eine mittige Anordnung für den Lagerstift am Deckel gewählt, so daß hinsichtlich des Aufsetzens des Deckels auch bei der gewählten zweifachen Lagerung für den Adapter für das Aufsetzen des Deckels keine bestimmte Lage eingehalten zu werden braucht.

Die Gegenkupplungen an der Umfangsfläche der Verlängerung des Adapters können bis zum freien Ende hin durchgezogen werden. Geschieht dies, dann liegt der Kragen des Arbeitswerkzeuges nur bereichsweise an der Umfangsfläche der Verlängerung des Adapters an und zwar praktisch nur in den Bereichen der Erhebungen der Gegenkupplungen.

Wenn man dagegen eine flächenmäßige Anlage des Kragens des Arbeitswerkzeuges am oberen freien Ende der Verlängerung des Adapters haben will, dann wird nach einem weiteren Vorschlag der Erfindung das vordere freie Ende dieser Verlängerung des Adapters als durchmessermäßig gleicher Zylinderkörper ausgebildet.

Um Unfällen bei der Benutzung derartig elektrisch betriebener Geräte zum Bereiten und bearbeiten von Nahrungsmitteln zu vermeiden, die dadurch entstehen können, daß dann, wenn sich die Arbeitswelle und damit das zugeordnete Arbeitswerkzeug in Umdrehungen versetzen läßt, ohne daß der Deckel sich auf dem Aufnahmebehälter befindet, ist eine Sicherheitseinrichtung vorgesehen. Es gibt zwar bereits zahlreiche Ausführungsformen derartiger Sicherheitseinrichtungen, die in aller Regel neben mechanischen Bestandteilen auch elektrische aufweisen, so daß sowohl die Verriegelung des Deckels als auch die Kontrolle des elektrischen Ein- und Ausschalters für den Elektromotor möglich ist. Jedoch sind die bekannten Ausführungsformen derartiger Sicherheitseinrichtungen verhältnismäßig aufwendig in ihrem Aufbau und daher einmal nicht einfach zusammenzusetzen sondern im Gebrauch auch störanfällig.

Eine weitere Aufgabe der Erfindung besteht daher darin, für ein elektrisch betriebenes Gerät der eingangs näher genannten Art eine Sicherheitseinrichtung zu schaffen, die einfach in ihrem Aufbau und dabei betriebssicher ist. Zur Lösung dieser Aufgabe wird vorgeschlagen, daß die Sicherheitseinrichtung aus einer Verlängerung des Deckels des Aufnahmebehälters besteht, deren eine Verzahnung tragender, vorderer Bereich in einen Aufnahmeschlitz des Gehäuses einführbar ist und mit der Verzahnung eines drehbar im Gehäuse gelagerten Schaltrades zusammenwirkt, welches derart ausgebildet ist, daß ein Drehknopf für einen Schalter nur in einer — nämlich der Schaltbereitschaftslage — drehbar ist.

Bei der bevorzugten Ausführungsform einer solchen Sicherheitseinrichtung weist das Schaltrad eine mittlere scheibenförmige Nabe auf, deren Umfangsfläche bereichsweise verzahnt ist und wobei die Nabe auf ihren beiden Seiten einen rohrförmigen Ansatz trägt, dessen unterer Teil zur drehbaren Lagerung des Schaltrades mit einem Vorsprung des Gehäuses zusammenwirkt, während der obere Teil Schlitze aufweist, in die in der Schaltstellung ein Randbereich des Drehknopfes eingreift. Eine solche Sicherheitseinrichtung besteht aus verhältnismäßig wenigen Teilen, die darüber hinaus auch einfach gefertigt und montiert werden können. Zur Lagerung des Schaltrades kann dabei dem Gehäuse des Gerätes ein Lagervorsprung direkt angeformt werden. Nur in der Schaltbereitschaftslage ist ein Weiterdrehen des Drehknopfes und damit ein bereichsweises Eintreten seines Randes in die Schlitze des rohrförmigen Ansatzes des Schaltrades möglich. In allen anderen Stellungen würde beim Versuch, den Drehknopf zu drehen, der Randbereich gegen die Außenfläche des rohrförmigen Ansatzes stoßen und dadurch die Drehung verhindern.

Es empfiehlt sich, an die Verzahnung der Nabe eine Ausnehmung anschließen zu lassen, deren Enden im Zusammenwirken mit einem ortsfesten Anschlag der Begrenzung der Drehbewegung des Schaltrades dienen. Die Länge dieser Ausnehmung bzw. der gegenseitige Abstand der Enden der Ausnehmung bestimmt im Zusammenwirken mit dem Anschlag das Maß der Drehbewegung, also den Drehwinkel.

Zur Halterung des Deckels ist es zweckmäßig, wenn die Verlängerung des Deckels außer der Verzahnung einen im Querschnitt L-förmigen Bereich aufweist, dessen vorspringender Schenkel in der Sperrlage des Deckels unter die Schnaupe des Aufnahmebehälters greift.

Ferner ist es möglich, dem Schaltrad noch eine Belastungsfeder zuzuordnen. Durch die soll ein ungewolltes Betätigen der Sicherheitseinrichtung bzw. des Schaltrades vermieden werden.

Auf der Zeichnung ist die Erfindung in mehreren Ausführungsbeispielen dargestellt und zwar zeigen:

Fig. 1 ein erfindungsgemäß ausgebildetes, elektrisch betriebenes Gerät für die Bearbeitung und Zubereitung von Nahrungsmitteln in Vorderansicht, teilweise geschnitten,

Fig. 2 das elektrisch betriebene Gerät für die Bearbeitung und Zubereitung von Nahrungsmitteln gemäß Fig. 1 in Draufsicht, teilweise weggebrochen,

Fig. 3 eine erste Ausführungsform eines Lüfterrades für das elektrisch betriebene Gerät nach der Fig. 1 in Draufsicht,

Fig. 4 im vergrößerten Maßstab einen Teilschnitt durch das elektrisch betriebene Gerät für die Bearbeitung und Zubereitung von Nahrungsmitteln nach Fig. 1, teilweise weggebrochen,

Fig. 5 ein Knetwerkzeug für das elektrisch betriebene Gerät für die Bearbeitung und Zubereitung von Nahrungsmitteln nach Fig. 1 in Draufsicht und im verkleinerten Maßstab,

Fig. 6 das Knetwerkzeug gemäß der Fig. 5 im Schnitt,

Fig. 7 einen für das elektrisch betriebene Gerät nach Fig. 1 bestimmten Adapter mit einem daran lösbar angeordneten Messer, teilweise in Seitenansicht, teilweise im Schnitt,

Fig. 8 eine Draufsicht auf das Messer gemäß der Fig. 7, jedoch im verkleinerten Maßstab,

Fig. 9 einen für das elektrisch betriebene Gerät gemäß Fig. 1 bestimmten Adapter mit einer lösbar damit verbundenen Sahnescheibe, teilweise in Seitenansicht, teilweise im Schnitt,

Fig. 10 eine Draufsicht auf die Sahnescheibe gemäß der Fig. 9, jedoch im verkleinerten Maßstab,

Fig. 11 einen für das elektrisch betriebene Gerät für die Bearbeitung und Zubereitung von Nahrungsmitteln gemäß Fig. 1 bestimmten Adapter mit einem lösbar daran befestigten Werkzeugträger, teilweise in Seitenansicht, teilweise geschnitten,

Fig. 12 einen Schnitt durch den Adapter mit Werkzeugträger gemäß der Fig. 11 entlang der Linie XII-XII;

Fig. 13 eine Draufsicht auf den Werkzeugträger gemäß der Fig. 11, jedoch im verkleinerten Maßstab,

Fig. 14 einen Längsschnitt durch den Werkzeugträger gemäß der Fig. 13,

Fig. 15 in Draufsicht eine Raspelscheibe, die dem Werkzeugträger gemäß den Fig. 13 und 14 zugeordnet ist,

Fig. 16 die Raspelscheibe gemäß der Fig. 15 im Schnitt,

Fig. 17 einen Schnitt durch das Gehäuse des elektrisch betriebenen Gerätes für die Bearbeitung und Zubereitung von Nahrungsmitteln gemäß Fig. 2, entlang der Linie XVII-XVII der Fig. 1, teilweise weggebrochen,

Fig. 18 eine Draufsicht auf das Gehäuse gemäß Fig. 17, teilweise weggebrochen und teilweise geschnitten, dargestellt in der Schaltbereitschaftslage des Schalters,

Fig. 19 eine Motorabdeckung für den Elektromotor des elektrisch betriebenen Gerätes für die Bearbeitung und Zubereitung von Nahrungsmitteln gemäß der Fig. 1 und

Fig. 20 eine Draufsicht auf die Motorabdeckung gemäß der Fig. 19.

Es sei zunächst vorausgeschickt, daß in den Figuren der Zeichnungen nur diejenigen Teile eines elektrisch betriebenen Gerätes für die Bearbeitung und Zubereitung von Nahrungsmitteln dargestellt sind, die für das Verständnis der Erfindung von Bedeutung sind. Es fehlen insbesondere die elektrischen Zuleitungen und die Verdrahtungen sowie die mit ihnen zusammenwirkenden Schalt- und Steuereinrichtungen. Alle fehlenden Teile können einen an sich bekannten Aufbau haben.

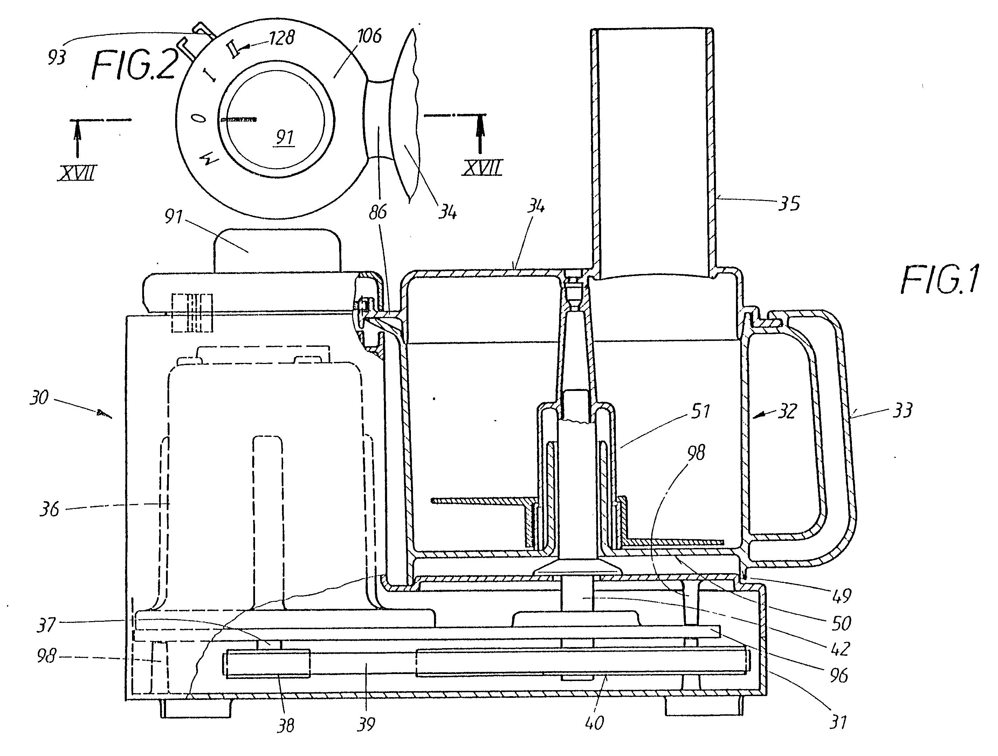

Das dem Ausführungsbeispiel zugrunde gelegte elektrisch betriebene Gerät für die Bearbeitung und Zubereitung von Nahrungsmitteln hat — wie aus der Fig. 1 der Zeichnung ersichtlich — ein Gehäuse 30, in welchem der Elektromotor und Steuerungs- und Schalteinrichtungen des Gerätes untergebracht sind. Das Gehäuse 30 hat einen Gehäusefuß 31, wobei Gehäuse 30 und Gehäusefuß 31 — wie die Fig. 1 erkennen läßt — im wesentlichen L-förmig gestaltet sind. Auf der neben dem Gehäuse 30 liegenden Oberfläche des Gehäusefußes 31 ist ein generell mit 32 bezeichneter Aufnahmebehälter (Topf) aufgestellt. Der Aufnahmebehälter 32 ist am Gerätefuß 31 in bekannter weise gegen Abheben zu sichern, wie z. B. durch bajonettverschlußartige Halter. Der Aufnahmebehälter 32 hat einen angeformten Handgriff 33 und einen abnehmbaren Deckel 34, der seinerseits mit einem Einfüllstutzen 35 ausgestattet ist, durch den in bekannter Weise das Zuführen von zu zerkleinernden Nahrungsmitteln erfolgt. Auch der Deckel 34 ist am Aufnahmebehälter 32 durch beispielsweise Unterfassen von Vorsprüngen gesichert.

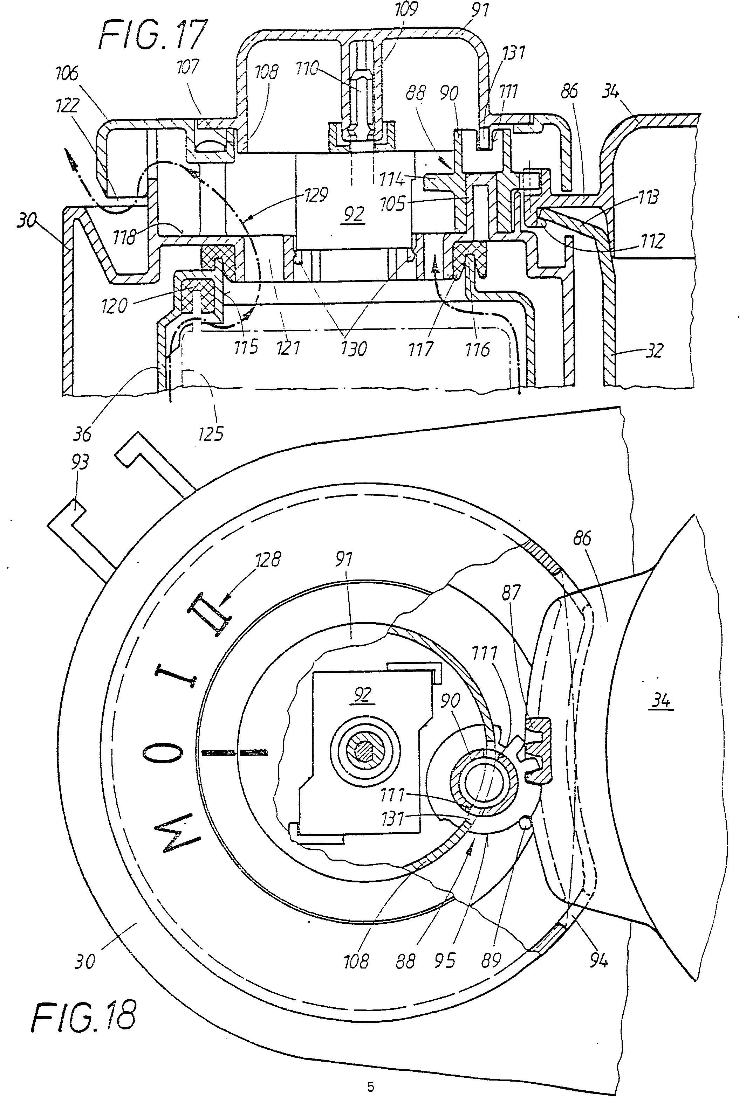

In dem Gehäuse ist ein an sich bekannter Elektromotor 125 untergebracht, der in der Fig. 1 der Zeichnung nicht sichtbar, jedoch in der Fig. 17 strichpunktiert dargestellt ist. Der Elektromotor 125 sowie eine Motorabdeckung 36 werden von einer Trägerplatte 96 aufgenommen, die sich im wesentlichen über die gesamte Länge des Gehäusefußes 31 erstreckt. Die Trägerplatte 96 wirkt mit Abstützungen 98 zusammen, die den Wandungen des Gehäusefußes 31 innenliegend angeformt sind und für eine Lagesicherung der Trägerplatte 96 sorgen. Dabei wirken die Abstützungen 98 von unterschiedlichen Seiten her auf die Trägerplatte 96 ein.

Der Elektromotor 125 hat eine Motorwelle 37, deren freies Ende in den Hohlraum des Gehäusefußes 31 hineinragt und dort ein Rad 38 trägt, welches mit einem Riemen, vorzugsweise mit einem Zahnriemen 39, zusammenwirkt. Dieser Zahnriemen 39 wird — wie die Fig. 1 erkennen läßt — über ein im Durchmesser wesentlich größeres Antriebsrad 40 herumgeführt. Dieses Antriebsrad 40 ist erfindungsgemäß als Lüfterrad ausgebildet und hat an seiner Umfangsfläche liegend eine Vielzahl von Zähnen 41, die mit den nicht näher bezeichneten Gegenzähnen des Zahnriemens 39 in an sich bekannter Weise zusammenwirken.

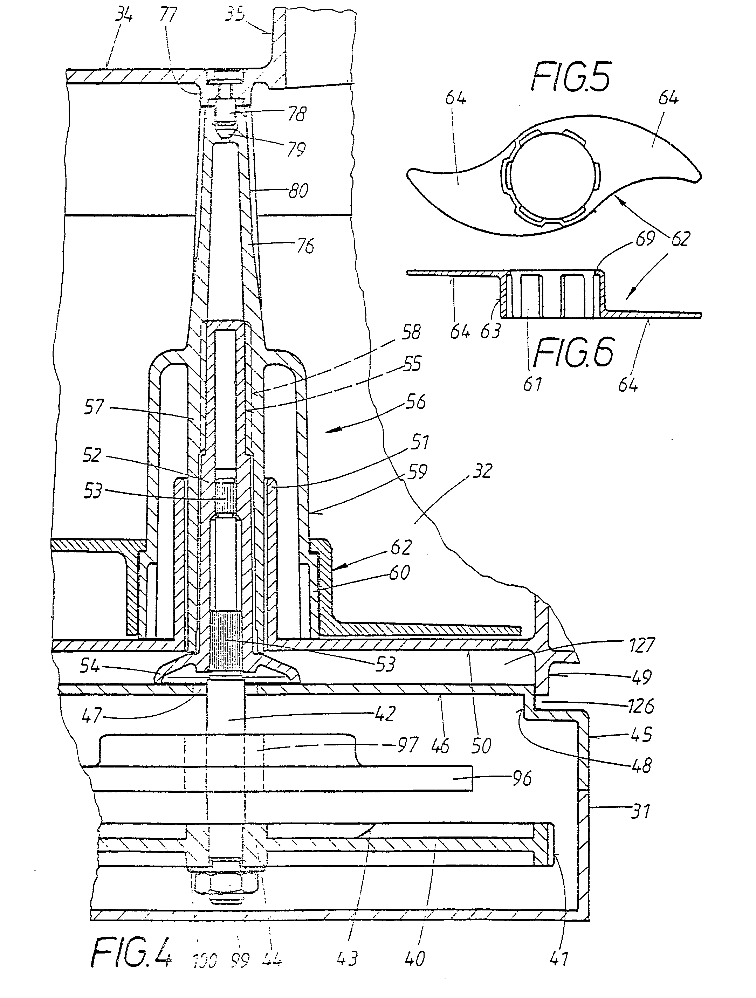

Das als Lüfterrad ausgebildete Antriebsrad 40 ist auf dem in den Hohlraum des Gehäusefußes 31 hineinragenden Ende einer Arbeits- bzw. Werkzeugwelle 42 angeordnet. Gemäß dem Ausführungsbeispiel nach der Fig. 4 ist das Lüfterrad 40 auf dem Ende der Antriebswelle 42 mittels einer Mutter 99 unter Zwischenschaltung einer Scheibe 100 gehalten. Daneben können aber auch andere bekannte Befestigungsarten zum Halten des Lüfterrades 40 auf der Werkzeug- oder Antriebswelle 42 benutzt werden. Insbesondere können im Bereich der Nabe 44 des Lüfterrades 40 Befestigungsmöglichkeiten für das freie Ende der Werkzeug- oder Antriebswelle 42 vorgesehen sein. Beispielsweise ist die formschlüssige Anordnung einer unrunden Mutter in der Nabe 44 des Lüfterrades 40 möglich.

Dem Lüfterrad 40 ist eine Vielzahl von Schaufeln 43 zugeordnet. Hinsichtlich der Ausbildung und der Gestaltung dieser Schaufeln 43 gibt es zahlreiche Möglichkeiten. Zwei dieser möglichen Ausführungsformen sind in den Fig. 3 und 4 der Zeichnung dargestellt. Die Schaufeln 43 können im übrigen nicht nur eine an sich bekannte Ausbildung sondern auch in ebenfalls an sich bekannter Weise mit der Nabe 44 verbunden sein. Auch ist eine einstückige Ausführung denkbar. Soweit es die Platzverhältnisse im Hohlraum des Gehäusefußes zulassen und soweit es keine zu große Geräuscherhöhung beim Betrieb gibt, ist es auch möglich, die Schaufeln über den Rand des Lüfterrades 40 hinausragen zu lassen.

Wie die Fig. 1 und 4 der Zeichnungen erkennen lassen, ist der Gehäusefuß 31 zweiteilig ausgestaltet, wobei die beiden Teile mit bekannten — und daher fortgelassenen — Mitteln zusammengehalten werden können. Der untere, nicht näher bezeichnete Teil des Gehäusefußes 31 ruht auf einer Fläche, beispielsweise auf einer Tischplatte. Der Oberteil 45 hat einen glatten Durchbruch 47 zum Durchgriff der Arbeits- bzw. Werkzeugwelle 42. Dieser Durchbruch liegt im Bereich der Decke 46 des Oberteiles 45, wobei die Decke 45 über einen Absatz 48 in die Mantelfläche übergeht. Der Aufnahmebehälter 32 (Topf) hat an seiner Unterseite Vorsprünge 49, die dem Boden 50 des Aufnahmebehälters 32 unmittelbar angeformt sind. Die Vorsprünge 49 — die im Abstand voneinander liegen — wirken mit der Außenfläche des Absatzes 48 zusammen, so daß eine Querverschiebung des Aufnahmebehälters 32 auf dem Aufstellfuß 31 nicht möglich ist. Durch die Anordnung von mehreren Vorsprüngen 49 und durch die Bildung eines Spaltes 126 zur benachbarten Fläche des Oberteiles 45 des Gehäusefußes 31 sind Öffnungen gebildet, durch die eine gegebenenfalls in den Zwischenraum 127 zwischen Decke 46 und Boden 50 gelangte Flüssigkeit in noch zu schildernder Weise nach außen befördert werden kann.

Dem Boden 50 des Aufnahmebehälters 32 ist ein hülsenartiger Vorsprung 51 angeformt. Dieser ragt — wie die Fig. 1 und 4 der Zeichnung erkennen lassen — verhältnismäßig weit in das Innere des Aufnahmebehälters 32 hinein. In den hülsenartigen Vorsprung 51 ragt das obere Ende der Arbeits- bzw. Werkzeugwelle 42. Die Arbeits- bzw. Werkzeugwelle 42 ist durchmessermäßig mehrfach abgesetzt und hat etwa im Bereich des hülsenartigen Vorsprunges 51 liegend zwei im Abstand voneinander angeordnete Befestigungsbereiche 53, die als Rändelungen an ihrer Außenfläche ausgebildet sind. Diese Befestigungsbereiche 53 dienen zur festen Verbindung mit einer generell mit 52 bezeichneten Isolierhülse, die einstückig aus einem Kunststoff hergestellt und nach oben hin verschlossen ist. Das gegenüberliegende andere Ende der Isolierhülse 52 ist als scheibenartiger Fuß 54 ausgebildet, der — wie die Fig. 4 am besten erkennen läßt — in den Zwischenraum 127 zwischen dem Deckel 46 und dem Boden 50 des Aufnahmebehälters 32 angeordnet ist. Dieser scheibenartige Fuß 54 sorgt dafür, daß Flüssigkeiten, die beim Gebrauch des elektrisch betriebenen Gerätes durch den hülsenartigen Vorsprung 51 hindurch aus dem Aufnahmebehälter 32 kommend in den Zwischenraum 127 gelangt sein sollten, aus diesem wieder hinausgeschleudert werden und dabei durch den erwähnten Spalt 126 bzw. durch die Freiräume zwischen den Vorsprüngen 49 ins Freie gelangen können.

An der Außenseite der Isolierhülse 52 sind Kupplungsvorsprünge 55 vorgesehen, die mit Gegenkupplungen 58 eines generell mit 56 bezeichneten Adapters zusammenwirken. In Draufsicht gesehen bilden die Kupplungsvorsprünge 55 der Isolierhülse 52 eine etwa wellenförmige oder auch zahnradförmig verlaufende Fläche, die sich zu einem Kreis schließt. In die Wellentäler bzw. die Zahnlücken greifen zwischen den Kupplungsvorsprüngen 55 die Gegenkupplungen 58 des Adapters 56 ein, wobei die Kraftangriffsflächen im wesentlichen senkrecht aufeinanderstehen. Auf diese Weise ist der Adapter 56 auf Mitnahme gekuppelt. Dabei sind die Gegenkupplungen 58 so gestaltet, daß ein paßgerechtes formschlüssiges Zusammenwirken mit den Kupplungen 55 erfolgt.

Wie aus der Fig. 4 der Zeichnung am besten erkennbar ist, hat der Adapter ein inneres Teilstück 57, das nach unten hin offen ist. Der untere Bereich des inneren Teilstückes 57 greift in den Zwischenraum zwischen der Innenwand des hülsenartigen Vorsprunges 51 und der Außenwand der Isolierhülse 52, wobei in der in Fig. 4 gezeigten Lage der Kupplungsvorsprünge 55 der Isolierhülse 52 mit den Gegenkupplungen 58 an der Innenwand des inneren Teilstückes 57 miteinander in Eingriff stehen. Dies bedeutet, daß der Adapter 57 mit der Isolierhülse 52 auf Mitnahme gekuppelt ist.

Unter Bildung eines Zwischenraumes hat der Adapter 56 auch ein äußeres Teilstück 59, welches nach oben hin geschlossen, nach unten hin jedoch offen ist. Im Bereich der unteren Außenfläche des äußeren Teilstückes 59 hat der Adapter 56 Gegenkupplungen 60, die mit Kupplungen 61 eines Werkzeuges zusammenwirken. Die Gegenkupplungen 60 sind im gewählten Ausführungsbeispiel untereinander gleichgestaltet und gleichmäßig verteilt über den unteren Bereich der Umfangsfläche des äußeren Teilstückes 59 angeordnet. Auch hier gilt, daß in Draufsicht gesehen der untere Bereich des äußeren Teilstückes 59 wellenförmige oder zahnradförmige Flächen aufweist, die sich zu einem Kreis schließen. In die Wellentäler bzw. Zahnlücken zwischen den Gegenkupplungen 60 greifen die Kupplungen 61 passend ein.

Zu den Kupplungen und Gegenkupplungen sowohl von Adapter 56 als auch von der Isolierhülse 52 gilt, daß in den dargestellten Ausführungsformen diese in Richtung der Längsachse des Adapters 56 bzw. der Isolierhülse 52 verlaufen. In Abwandlung dieser dargestellten Ausführungsbeispiele können die Kupplungen und Gegenkupplungen auch mit dieser Längsachse jeweils einen Winkel einschließen. Entsprechendes gilt auch für die mit dem Adapter 56 zusammenwirkenden Kupplungen der Werkzeuge, die eine angepaßte Schrägstellung bei dieser Variante haben müssen.

Die Gegekupplungen 60 des äußeren Teilstückes 59 des Adapters 56 arbeiten mit Kupplungen 61 von Werkzeugen (Arbeitswerkzeugen) zusammen. Erfindungsgemäß werden ein- und demselben Adapter 56 mehrere unterschiedlich gestaltete Werkzeuge zugeordnet, die in Abhängigkeit von den durchzuführenden Arbeiten von dem Benutzer wahlweise herangezogen werden und jeweils in einfacher Weise lösbar mit dem Adapter 56 verbunden werden.

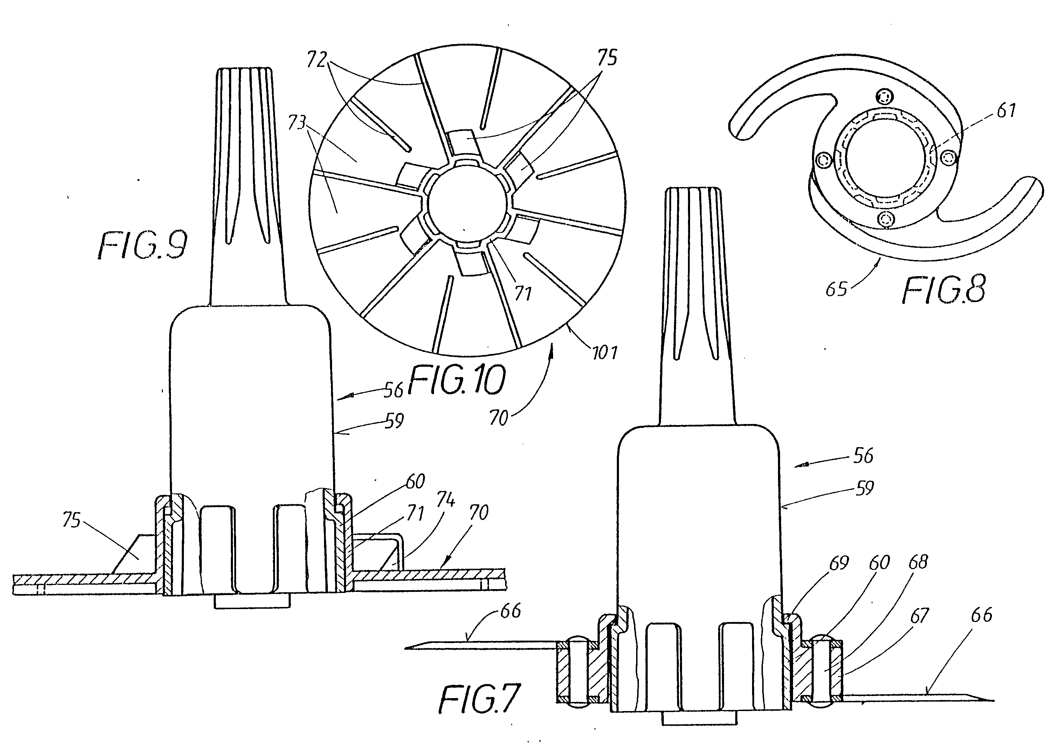

In den Figuren der Zeichnungen sind insgesamt drei unterschiedlich gestaltete Werkzeuge dargestellt. Die Fig. 7 und 8 zeigen ein generell mit 65 bezeichnetes Messer. Dieses besitzt zwei sichelförmig gestaltete Messerflügel 66, die in bekannter Weise angeschärft sind und die — vergl. dazu die Fig.7 der Zeichnung — in unterschiedlichen Ebenen angeordnet sind. Dabei ist der eine Messerflügel 66 dem Boden 50 des Aufnahmebehälters 32 zugekehrt, während der diametral gegenüberliegende andere Messerflügel 66 in einem größeren Abstand von diesem Boden 50 liegt. Die beiden Messerflügel 66 sind dabei durch Niete 68 mit der Nabe 67 des Messers 65 fest verbunden. Die Nabe 67 hat dabei auch die schon erwähnten Kupplungen 61, die mit den Gegenkupplungen 60 des äußeren Teilstückes 59 des Adapters 56 zusammenwirken. Am Messer 65 ist ein Auflagerand 69 vorgesehen, der mit einem nicht näher bezeichneten Vorsprung des Adapters 56 zusammenwirkt. Aus der in Fig.7 dargestellten Lage — der Arbeitslage — ergibt sich, daß das Abstützen des Auflagerandes 69 des Messers 65 in einer solchen Höhe am Adapter 56 erfolgt, daß der untere der beiden Messerflügel 66 in einem geringen Abstand vom Boden 50 des Aufnahmebehälters 32 angeordnet ist.

In den Fig. 5 und 6 der Zeichnung ist ein weiteres, wahlweise mit dem Adapter 56 zu kuppelndes Werkzeug dargestellt. Es handelt sich dabei um ein generell mit 62 bezeichnetes Knetwerkzeug. Dieses Knetwerkzeug 62 ist einstückig aus einem Werkstoff, beispielsweise aus einem Kunststoff, hergestellt und hat zwei untereinander gleichgestaltete Flügel 64, die jeweils gekrümmte Begrenzungsflächen aufweisen, die in eine Spitze auslaufen. Die Flügel 64 sind untereinander gleichgestaltet, jedoch in unterschiedlicher Höhe der Nabe 63 des Knetwerkzeuges 62 angeformt. Die Nabe 63 hat wiederum Kupplungen 61, die mit den Gegenkupplungen 60 des Adapters 56 zusammenwirken. Die Kupplungen 61 des Knetwerkzeuges 62 können gleichgestaltet sein wie die des Messers 65. Auch hat das Knetwerkzeug 62 wiederum einen Auflagerand 69, der in der schon geschilderten Weise mit einer nicht näher bezeichneten, an der Außenfläche des Adapters 56 liegenden Schulter zusammenwirkt.

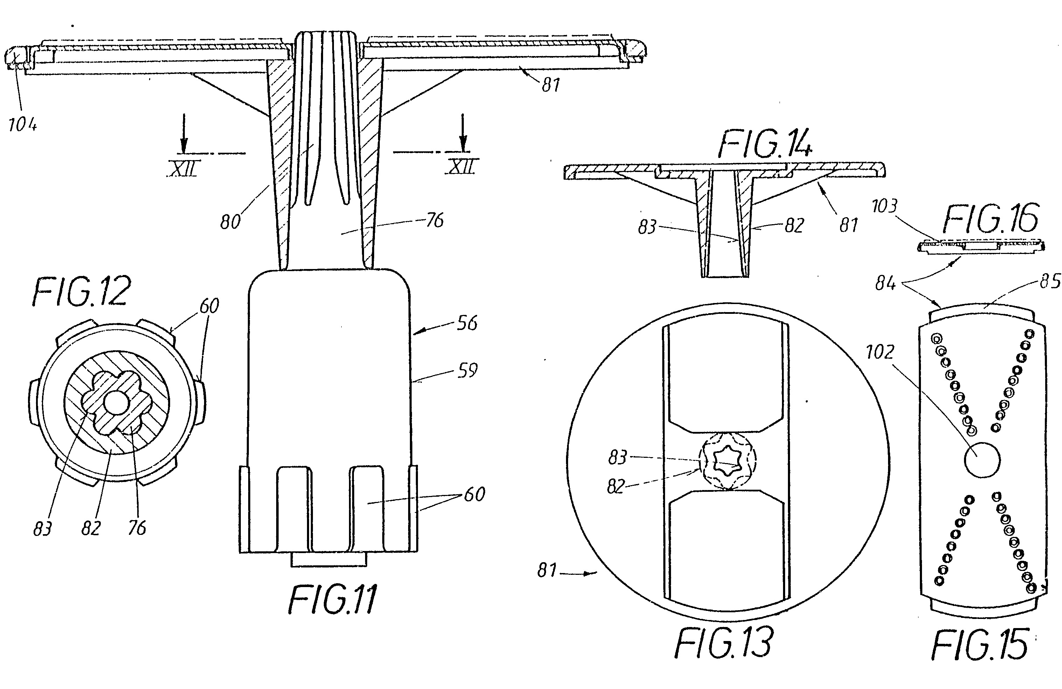

Als drittes, wahlweise mit dem Adapter 56 zu kuppelndes Werkzeug ist die in den Fig. 9 und 10 dargestellte Sahnescheibe 70 vorhanden. Die Sahnescheibe 70 hat auf ihrem dem Boden des Aufnahmebehälters 32 zugekehrten Seite eine Vielzahl von sternförmig angeordneten Rippen 72, die jedoch unterschiedlich lang bemessen sind, und zwar wechselt jeweils eine kurze mit einer langen Rippe 72 ab, wobei die längere Rippe 72 jeweils in die als Mitnehmernabe 71 ausgebildete Nabe der Sahnescheibe 70 einmündet. Die längeren Rippen 72 schliessen Luftleitkanäle 73 ein, deren untere Wand beim bestimmungsgemäßen Gebrauch von der Innenfläche des Bodens 46 des Aufnahmebehälters 32 gebildet wird. Die Rippen 72 liegen mit ihren äußeren Flächen auf dem Boden 50 des Aufnahmebehälters 32 auf. Den Luftleitkanälen 73 sind im Bereich der Mitnehmernabe 71 Lufteinlaßöffnungen 74 zugeordnet, während Luftauslaßöffnungen 101 durch den am Umfangsbereich der Sahnescheibe 70 zwischen benachbarten Rippen 72 vorhandenen Freiraum gebildet werden. Die Lufteinlaßöffnungen 74 sind durch taschenartig nach oben aufgewölbte Wandteile 75 gebildet, wobei jeweils zwei längere benachbarte Rippen 72 ein eine Lufteinlaßöffnung 74 bildender Wandteil 75 zugeordnet ist.

Im übrigen hat die Mitnehmernabe 71 wiederum Kupplungen 61, die denjenigen des Messers 65 bzw. des Knetwerkzeuges 62 entsprechen. Diese Kupplungen 61 wirken wiederum mit den Gegenkupplungen 60 des Adapters 56 zusammen, nur mit dem Unterschied, daß der Auflagerand 69 in der Arbeitslage gemäß Fig. 9 nunmehr entfernt von der nicht näher bezeichneten Schulter im Bereich der Gegenkupplungen 60 des Adapters 56 angeordnet ist. Dies geschieht, um zu gewährleisten, daß die Außenflächen der Rippen 72 — wie gewollt — auf dem Boden 50 des Aufnahmebehälters 32 aufliegen. Auf der anderen Seite ist der Auflagerand 69 als Mitnehmer benutzbar, nämlich dann, wenn der Adapter 56 zusammen mit der Sahnescheibe 70 von der Isolierhülse 52 aus dem Aufnahmebehälter 32 herausgezogen werden soll.

Die Sahnescheibe 70 dient nicht nur zum Bereiten von Schlagsahne sondern auch zum Zubereiten von Eischnee, Majonaise und dergl. Bei Benutzung einer solchen Sahnescheibe 70 wird nicht nur ein Rühreffekt erzielt sondern es gelingt, mit ihr die sahnige Konsistenz des Rührgutes durch Verteilung feinster Luftbläschen im Rührgut zu erzielen. Dabei wird durch die Drehung der Sahnescheibe 70 das Rührgut infolge der Fliehkraft im Eck-Ringbereich des Bodens 50 des Aufnahmebehälters 32 wulstartig angeordnet und mit feinsten Luftbläschen durchsetzt. Durch diese intensive Arbeitsweise der Sahnescheibe 70 ist die benötigte Zeit, selbst zur Herstellung größerer Mengen von Schlagsahne, Eischnee, Majonaise od. dgl. gering.

Wie die Fig. 1 und 11 der Zeichnung erkennen lassen, ist bei der dargestellten Ausführungsform des Adapters 56 nicht nur vorgesehen, diesen in seinem unteren, also dem Boden 50 des Aufnahmebehälters 32 zugekehrten Bereich wahlweise eines der unterschiedlich gestalteten Werkzeuge zuzuordnen sondern es wird auch die Möglichkeit gegeben, im oberen, also dem Deckel 34 zugekehrten Bereich entweder direkt mit dem Adapter 56 Arbeitswerkzeuge zu kuppeln oder dort einen Werkzeugträger 81 lösbar zu befestigen, der seinerseits Arbeitswerkzeuge, wie Raffelscheibe, Pommes-Frites-Scheibe, Reibscheibe, Parmesanscheibe od. dgl. trägt.

Um dieses zu ermöglichen, hat der Adapter 56 eine Verlängerung 76, die durchmessermäßig gegenüber dem unteren Bereich des Adapters 56 verkleinert ist. Im gewählten Ausführungsbeispiel erstreckt sich die Verlängerung 76 bis etwa zum Deckel 34. Dort ist ein Lager 77 in einer Verdickung des Deckels 34 vorgesehen, welches zur Unterbringung eines Lagerstiftes 78 dient, dessen aus dem Lager 77 herausragendes Ende in eine Bohrung 79 des vorderen freien Endes der Verlängerung 76 des Adapters 56 eingreift. Eine derartige Lagerstelle läßt es zu, daß der Deckel 34 ohne weiteres vom Aufnahmebehälter 32 entfernt werden kann. Dies deshalb, weil der Lagerstift 78 leicht aus der Bohrung 79 der Verlängerung 76 des Adapters 56 herausgezogen werden kann. Umgekehrt greift beim Aufsetzen des Deckels 34 dessen Lagerstift wieder in diese Bohrung 79 ein.

An der Außenfläche der Verlängerung 76 des Adapters 56 sind — und zwar im oberen, dem Deckel 34 zugekehrten Bereich liegend — Gegenkupplungen 80 vorgesehen, die in ihrem Aufbau und auch in ihrer Wirkungsweise denjenigen Gegenkupplungen 60 entsprechen, die im unteren bereich des Adapters 56 vorhanden sind. Es ist lediglich zu vermerken, daß insoweit Unterschiede bestehen, als sich die Längen der Gegenkupplungen 60 und 80 voneinander unterscheiden können. Diese Gegenkupplungen 80 können — was in den Zeichnungen nicht dargestellt ist — unmittelbar mit einem an sich bekannten Arbeitswerkzeug zusammenwirken, welches das durch den Einfüllstutzen 35 des Deckels 34 zugeführte Gut zerkleinert.

Gemäß den Fig. 11 bis 16 der Zeichnungen ist jedoch eine andere Ausführungsform gewählt, nämlich die, daß der Verlängerung 76 ein generell mit 81 bezeichneter Werkzeugträger zugeordnet ist, der die Gestalt einer Trägerscheibe aufweist. Der Werkzeugträger 81 hat eine Nabe 82, die von einer Bohrung durchsetzt wird, an deren Innenwandungen Kupplungen 83 angeordnet sind, die mit den Gegenkupplungen 80 der Verlängerung 76 des Adapters 56 in der schon geschilderten Weise zusammenwirken. Das Querschnittsbild gemäß der Fig. 12 zeigt, daß auch in diesem Falle die Kupplungen 83 und Gegenkupplungen 80 wellenförmige, sich zu einem Kreis ergänzende Gestalt aufweisen.

Bei dem Ausführungsbeispiel nach der Fig. 11 der Zeichnung ist die Verlängerung 56 bis zum freien Ende hin mit Gegenkupplungen 80 versehen. In Abwandlung dieser Ausführungsform kann man die Gegenkupplungen 80 auch vorher enden lassen und das vordere freie Ende der Verlängerung 76 zylinderförmig gestalten. Somit läuft in diesem Falle das freie Ende der Verlängerung 76 in einen außen glattwandigen Zylinder mit konstantem Durchmesser aus, der kleiner ist als der Außendurchmesser der Verlängerung 76 und etwa den Kerndurchmesser des die Kupplungsrippen 80 aufweisenden Schaftes der Verlängerung 76 entspricht. Die wirksame Stützhöhe dieses Absatzes kann man der Höhe der Nabe des auf zunehmenden Werkzeuges anpassen, um bei unterschiedlich hohen Werkzeugen immer den gleichen Abstand zur Unterkante des Einfüllschachtes zu gewährleisten.

Ferner ist bei der Ausführungsform nach der Fig. 11 vorgesehen, daß das freie Ende der Nabe 82 des Werkzeugträgers 81 sich auf dem nicht näher bezeichneten, durch unterschiedliche Durchmesser gebildeten Absatz des Adapters 56 abstützt. Auch hier kann man eine Abänderung vornehmen, indem man die Nabe 82 kürzer bemißt, so daß sie nicht mit dem erwähnten Absatz des Adapters 56 in Wirkverbindung tritt. Man kann in diesem Falle durch Absatzbildung zwischen Kupplungen und Gegenkupplungen für eine Lagefixierung des Werkzeuges auf der Verlängerung 76 des Adapters 56 sorgen.

Ein Werkzeug, welches lösbar mit dem Werkzeugträger 81 verbunden werden kann, ist in den Fig. 15 und 16 der Zeichnung dargestellt, und zwar handelt es sich bei diesem Werkzeug um eine Raspelscheibe 84. Die Raspelscheibe 84 ist ein in Draufsicht gesehen etwa rechteckig gestalteter Körper, der an seinen beiden Schmalseiten je eine Verlängerung 85 aufweist, die aus der Grundebene der Raspelscheibe 84 herausgebogen ist, um den Rand 104 des Werkzeugträgers 81 zu urtergreifen, wie dies in der Fig. 11 ersichtlich ist. Die Raspelscheibe 84 hat ferner einen mittig angeordneten Durchbruch 102, der von einem nach unten, also in Richtung auf den Adapter 56 ragenden, umlaufenden Kragen 103 umgeben ist. Durch den Durchbruch 102 der Raspelscheibe 84 greift das vordere Ende der Verlängerung 76. Dabei hat man es in der Hand, den mit der Verlängerung 76 zu kuppelnden Werkzeugen unterschiedlich lang bemessene Kragen 103 zuzuordnen. Die Rapselscheibe 84 oder ein anderes — grundsätzlich bekanntes — Werkzeug kann in bekannter Weise auf das Nahrungsmittel einwirken, welches durch den Einfüllstutzen 35 des Deckels 34 zugeführt werden kann. In Abhängigkeit von den durchzuführenden Arbeiten kann man dann dem Werkzeugträger 81 ein anderes Werkzeug als die dargestellte Rapselscheibe 84 zuordnen.

Zu dem erfindungsgemäß ausgebildeten Gerät zum Bearbeiten und Zubereiten von Nahrungsmitteln gehört auch eine Sicherheitseinrichtung, deren Ausbildung und Gestalt aus den Fig. 17 und 18 der Zeichnung ersichtlich ist. Durch eine solche Sicherheitseinrichtung soll ein Inbetriebsetzen des Gerätes bei abgenommenem Deckel 34 verhindert werden, was zu Verletzungen des Benutzers führen könnte, weil die umlaufenden Arbeitswerkzeuge frei zugänglich wären.

Im gewählten Ausführungsbeispiel ist der Deckel 34 des Aufnahmebehälters 32 mit einer Verlängerung 86 versehen, deren vorderer freier Bereich als Verzahnung 87 ausgebildet ist. Diese Verzahnung 87 wirkt mit einem Schaltrad bzw. Ritzel 88 zusammen, welches auf dem Gehäuse 30 drehbar gelagert ist. Dem Schaltrad bzw. Ritzel ist auch ein Anschlag 89 zugeordnet, der in der Stellung des Schaltrades 88 gemäß Fig. 18 an dem einen Ende einer Ausnehmung 95 anliegt. Bestandteil des Schaltrades bzw. Ritzels 88 ist auch ein rohrförmiger Ansatz 90, der im Bezug auf eine mittlere scheibenförmige Nabe 114 des Schaltrades 88 nach beiden Seiten hin vorsteht. In die untere Bohrung des hülsenförmiger, Ansatzes 90 greift ein Vorsprung 105 des Gehäuses 30. Auf diesem Vorsprung 105 ist das Schaltrad 88 drehbar gelagert.

Zu dem Gehäuse 30 gehört auch eine Abdeckung 106, die den oberen Abschluß des Gehäuses 30 bildet und in ihrer Mitte liegend einen Durchbruch 107 aufweist, in den vorstehende Randbereiche 108 eines Drehknopfes 91 eingreifen. An der Innenwand seiner Decke liegend hat der Drehknopf 91 einen Hohlzapfen 109, der zur Unterbringung eines Lager- bzw. Betätigungsstiftes 110 dient, der seinerseits einem Schalter 92 zugeordnet ist. Dieser Schalter 92 kann einen an sich bekannten Aufbau haben, so daß in den Fig. 17 und 18 der Zeichnung nur das Gehäuse des Schalters 92 veranschaulicht ist. Der Schalter 92 kann im übrigen über Rastverbindungen 130 mit Teilen des Gehäuses 30 lösbar verbunden werden.

Der obere Teil des rohrförmigen Ansatzes 90 des Schaltrades 88 hat zwei Schlitze 111, die so angeordnet sind, daß der Randbereich 108 beim Betätigen des Drehknopfes 91 in sie eintreten und damit eine Drehung des Schaltrades 88 verhindern kann. Die Begrenzungswandungen der Schlitze 111 sind gekrümmt, wobei der Krümmungsmittelpunkt mit dem Mittelpunkt des Drehknopfes 91 zusammenfällt. Nachzutragen bleibt noch, daß die Verlängerung 86 des Deckels 34 durch einen Aufnahmeschlitz 94 des Gehäuses hindurchgreift, derart, daß die Verzahnung 87 innerhalb des Gehäuses 30 zu liegen kommt.

Die Wirkungsweise der als Sicherheitsschalter ausgebildeten Schalteinrichtung des elektrisch betriebenen Gerätes zum Zubereiten bzw. zum Behandeln von Nahrungsmitteln ist die folgende :

Zur Inbetriebnahme des elektrischen Gerätes wird dessen Aufnahmebehälter 32 auf den Gehäusefuß 31 in der aus der Fig. 1 ersichtlichen Weise aufgestellt. Der Deckel 34 des Aufnahmebehälters 32 wird dann derart verdreht, daß seine Verlängerung 86 in den Aufnahmeschlitz 94 des Gerätes 30 eintaucht. Bei dieser Bewegung untergreift ein im Querschnitt L-förmiger Bereich 112 die Schnaupe 113 des Aufnahmebehälters 32, wie dies die Fig. 17 der Zeichnung erkennen läßt.

Beim Verdrehen der Verlängerung 86 des Deckels 34 kommt dessen Verzahnung 87 in Wirkverbindung mit den Zähnen des Schaltrades bzw. Ritzels 88, das auf dem hohlen Vorsprung 105 des Gehäuses 30 drehbar gelagert ist. Die Zähne des Schaltrades 88 sind an der Umfangsfläche der scheibenförmigen Nabe 114 angeordnet. Die Zähne erfassen jedoch — wie die Fig. 18 zeigt, nur einen Teilbereich der Umfangsfläche der Nabe 114. Ein anderer Teil der Umfangsfläche ist mit der Ausnehmung 95 versehen, in die zur Drehbegrenzung des Schaltrades 88 der Anschlagstift 89 eingreift. Die Lage der Ausnehmung 95 bestimmt den Drehwinkel des Schaltrades 88.

Das Schaltrad 88 ist über die Verzahnung 87 der Verlängerung 86 des Deckels 34 in die in der Fig. 18 dargestellte Schaltbereitschaftslage gedreht worden.

In dieser Lage übergreift eine im Ringansatz 108 des Drehknopfes 91 angeordnete Ausnehmung 131 den rohrförmigen Ansatz des Schaltrades 88. Dabei befinden sich durch die Verzahnung 87 der Verlängerung 86 am Deckel 34 die Schlitze 111 des Schaltrades 88 in einer solchen Lage, daß der Ringansatz 108 bei Drehung des Drehknopfes 91 die Schlitze 111 passieren kann, um bei Betätigen des Drehknopfes 91 den Schalter 92 in eine seiner Schaltstellungen überführen zu können. Damit der Benutzer sehen kann, welche Schaltstellung eingeschaltet ist, sind Markierungen 128 vorgesehen, vergl. dazu die Fig. 18. In dieser Verriegelungsstellung ist der Deckel 34 nicht vom Aufnahmebehälter 32 abnehmbar.

Auf der anderen Seite bleibt festzuhalten, daß der Randbereich 108 des Drehknopfes 91 nur dann in den Schlitz 111 des rohrförmigen Ansatzes 90 eingreifen kann, wenn die in Fig. 18 dargestellte Schaltbereitschaftsstellung eingenommen ist.

Wie aus der Fig. 18 der Zeichnung ersichtlich, ist an der Außenfläche des Gehäuses 30 ein Kabelhalter 93 angeordnet.

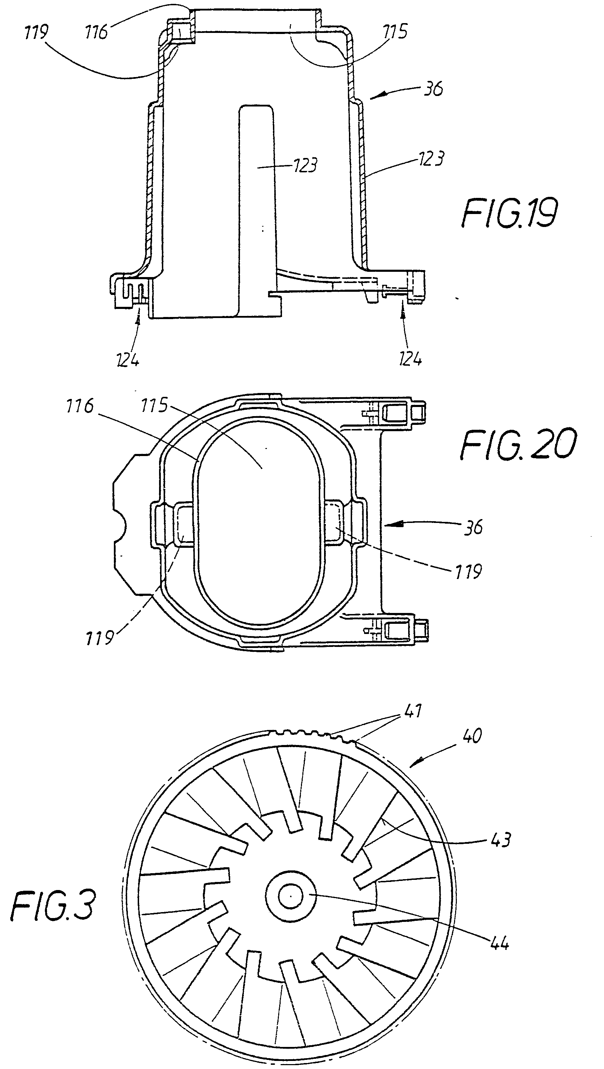

Dem Elektromotor 125 des Gerätes ist eine in den Fig. 19 und 20 dargestellte, generell mit 36 bezeichnete Motorabdeckung zugeordnet. Diese hat einmal die Aufgabe, die Geräuschbildung beim Betrieb des Gerätes herabzusetzen und zum anderen dient sie im Zusammenwirken mit Außenwandungen des Elektromotors 125 der Führung der Kühlluft, die vom Lüfterrad 40 erzeugt wird.

Die Motorabdeckung 36 ist im gewählten Ausführungsbeispiel als einstückiger, aus Kunststoff gefertigter Körper hergestellt. Die Motorabdeckung 36 ist auf ihrer dem Drehknopf 91 zugekehrten Seite mit einem ovalen Durchbruch 115 versehen, der von einem umlaufenden, hochgezogenen Rand 116 umgeben ist. Dieser Rand 116 dient zur Unterbringung einer leistenförmigen Dichtung 117, die mittels eines nicht näher bezeichneten Schlitzes auf den Rand 116 aufgesteckt ist. Die Dichtung 117 wirkt mit ihr benachbarten Bereichen einer Zwischenwand 118 des Gehäuses 30 zusammen.

Die Motorabdeckung 36 hat ferner in der Nähe des Randes 116 liegend einen kammerartigen Aufnahmeraum 119, in dem ein Pufferstück 120 zur Halterung des Motors angeordnet ist, wie dies die Fig. 17 erkennen läßt. Die gleiche Fig. 17 zeigt auch, daß in der Zwischenwand 118 Öffnungen 121 vorhanden sind, durch die die Kühlluft im Sinne der dort eingezeichneten Pfeile 129 ins Freie strömen kann. Dies geschieht nach mehrfacher Umlenkung durch einen Spalt 122 zwischen dem Gehäuse 30 und der Abdeckung 106. An der Außenseite liegend hat die Umfangsfläche der Motorabdeckung 36 Versteifungsrippen 123, die sich in Achslängsrichtung der Motorabdeckung 36 erstrecken.

Die Motorabdeckung 36 ist auch in ihrem unteren, dem Gehäusefuß 31 zugekehrten Ende offen. Damit kann die vom Lüfterrad 40 in Bewegung gesetzte Luft auch in den Zwischenraum zwischen den Außenwandungen des Elektromotors 125 und der Innenwand der Motorabdeckung 36 gelangen und von dort schließlich in Richtung der in Fig. 17 eingezeichneten Pfeile 129 durch den Spalt 122 ins Freie gelangen.

In ihrem unteren Bereich ist die Motorabdeckung 36 mit der Trägerplatte 96 lösbar verbunden. Als Verbindungsmittel können Einsteckverbindungen, Schnapp- oder Rastverbindungen benutzt werden, also solche Verbindungen, die sowohl ein leichtes Anbringen als auch bei Bedarf ein einfaches Wiederentfernen der Motorabdeckung 36 von der Trägerplatte 96 zulassen. Diese Verbindungen sind in der Fig. 19 generell mit 124 bezeichnet.

Wie bereits erwähnt, sind die dargestellten Ausführungen nur beispielsweise Verwirklichungen der Erfindung und diese nicht darauf beschränkt. Vielmehr sind noch mancherlei andere Ausführungen und Anwendungen möglich. So ist in den Fig. 1 und 4 der Zeichnung für den Adapter 56 eine doppelte Lagerung vorgesehen, denn der Adapter 56 sitzt dabei nicht nur in seinem unteren Bereich auf der Isolierhülse 52 auf sondern er ist unter Benutzung des Lagerstiftes 78 am Deckel 34 des Aufnahmebehälters 32 zusätzlich gelagert. In Sonderfällen kann auf diese zweite Lagerstelle im Bereich des Deckels 34 verzichtet werden. Bei einer solchen Ausführungsform wird die Verlängerung 76 nur bis in die Nähe der Innenwand des Deckels 34 geführt, ohne dort gelagert zu sein. Bei einer solchen Ausführungsform kann auf die Anordnung einer Bohrung im Bereich des freien Endes der Verlängerung 76 des Adapters verzichtet werden.

Die Ausbildung und auch die Anzahl der dem Adapter 56 zugeordneten Arbeitswerkzeuge kann mannigfach variiert werden, d. h. das Messer, das Knetwerkzeug, die Sahnescheibe können eine andere als die dargestellte Ausführungsform erhalten. Darüber hinaus können auch andere an sich bekannte Werkzeuge mit Kupplungen versehen sein, damit sie in der erfindungsgemäßen Art und Weise lösbar mit dem Adapter 56 verbunden werden können. Auch ist es möglich, die Gestalt und Ausbildung sowohl der Kupplungen als auch der Gegenkupplungen von Werkzeug und Adapter zu variieren. Dies gilt insbesondere für die Querschnittsgestaltung dieser Teile.

Auch dem Werkzeugträger 81 können andere als die dargestellte Raspelscheibe 84 zugeordnet werden. Der Einsatz von Raffelscheibe, von Pommes-Frites-Scheiben, Reibscheiben oder Parmesanscheiben ist möglich. Dabei ist grundsätzlich auch daran gedacht, diese Arbeitswerkzeuge direkt mit der Verlängerung 76 des Adapters lösbar zu verbinden, wobei in einem solchen Falle auf die Verwendung eines Werkzeugträgers 81 verzichtet werden könnte.

Ferner wäre es denkbar, in Abänderung der Ausführungsform gemäß den Fig. 17 und 18 der Zeichnung dem Schaltrad bzw. Ritzel 88 eine Feder zuzuordnen. Diese Feder belastet das Schaltrad 88 und verhindert eine ungewollte Fehlbedienung.

In dem Boden des Gehäusefußes 31 können im Bereich des Lüfterrades 40 liegend Ansaugöffnungen für Frischluft vorgesehen sein. Dabei empfiehlt es sich, den Boden nicht unmittelbar auf einer Tischfläche od. dgl. aufruhen zu lassen sondern am Boden Füße vorzusehen, die die Gewähr dafür geben, daß der Boden einen der Höhe dieser Füße entsprechenden Abstand von der Tischplatte hat. Dadurch kann ein ungehindertes Ansaugen von Frischluft erfolgen. Ferner ist es zweckmäßig, im Inneren des Gehäusefußes Luftleitkanäle vorzusehen, die die vom Lüfterrad erzeugte Frischluft in den Bereich unterhalb des Elektromotors fördern, damit dann von dort aus eine Weiterleitung in Richtung Elektromotor erfolgen kann. Im einfachsten Falle kann man die Luftleitkanäle den Innenwandungen des Gehäusefußes 31 zuordnen, beispielsweise indem man dort Leitrippen od. dgl. anordnet. Darüber hinaus gibt es aber auch die Möglichkeit, für sich hergestellte Luftleitkanäle zu benutzen, die dann in das Innere des Gehäusefußes eingesetzt werden.

Anstelle des in den Figuren der Zeichnungen dargestellten Adapters 56 könnten auch zwei unterschiedlich gestaltete und wahlweise benutzbare Adapter vorgesehen sein. Dabei könnte der eine dann benutzt werden, wenn in dem Aufnahmebehälter 32 nur solche Arbeitswerkzeuge eingesetzt werden, die im Bereich des Bodens desselben arbeiten. In einem solchen Falle brauchte der Adapter nur so lang bemessen zu sein, daß er etwa gleich hoch ist wie die Isolierhülse, die ihn lösbar aufnimmt. Die zweite Ausführungsform des Adapters wäre dann mit der Verlängerung 76 ausgestattet. Dieser Adapter würde dann benutzt, wenn entweder nur Arbeiten im Bereich des Einfüllstutzens des Deckels durchgeführt werden sollen oder wenn alternativ sowohl im unteren als auch im oberen Teil des Aufnahmebehälters die Bearbeitung bzw. Zubereitung von Nahrungsmitteln durchgeführt werden soll.

Bezugszeichenliste :

    30 — Gehäuse
    31 — Gehäusefuß
    32 — Aufnahmebehäler (Topf)
    33 — Handgriff (von 32)
    34 — Deckel (von 32)
    35 — Einfüllstutzen (an 34)
    36 — Motorabdeckung (Zweitgehäuse)
    37 — Motorwelle
    38 — Rad (auf 37)
    39 — Zahnriemen
    40 — Antriebsrad = Lüfterrad
    41 — Zähne (von 40)
    42 — Arbeits-Werkzeugwelle
    43 — Schaufeln (von 40)
    44 — Nabe (von 40)
    45 — Oberteil (von 31)
    46 — Decke (von 45)
    47 — Durchbruch (in 46)
    48 — Absatz (von 46)
    49 — Vorsprung (von 50)
    50 — Boden (von 32)
    51 — hülsenartiger Vorsprung (von 50)
    52 — Isolierhülse
    53 — Befestigungsbereich (an 42)
    54 — scheibenartiger Fuß (von 52)
    55 — Kupplungsvorsprünge (an 52)
    56 — Adapter
    57 — inneres Teilstück (von 56)
    58 — Gegenkupplungen (an 57)
    59 — äußeres Teilstück (von 56)
    60 — Gegenkupplungen (an 59)
    61 — Kupplungen (am Werkzeug)
    62 — Knetwerkzeug
    63 — Nabe (von 62)
    64 — Flügel (von 62)

65 — Messer
66 — Messerflügel
67 — Nabe (von 65)
68 — Niet (für 66)
69 — Auflagerand (von 62 bzw. 65)
70 — Scheibe (Sahnescheibe)
71 — Mitnehmernabe (an 70)
72 — Rippen (von 70)
73 — Luftleitkanäle (von 70)
74 — Lufteinlaßöffnungen
75 — Wandteil (Begrenzung von 74)
76 — Verlängerung (von 56)
77 — Lager (an 34)
78 — Lagerstift
79 — Bohrung (in 76)
80 — (obere) Gegenkupplung (an 76)
81 — Werkzeugträger (Trägerscheibe)
82 — Nabe (von 81)
83 — Kupplungen (an 82)
84 — Raspelscheibe
85 — Verlängerung (an 84)
86 — Verlängerung (an 34)
87 — Verzahnung
88 — Schaltrad
89 — Anschlag
90 — rohrförmiger Ansatz (an 88)
91 — Drehknopf
92 — Schalter
93 — Kabelhalter
94 — Aufnahmeschlitz
95 — Ausnehmung
96 — Trägerplatte
97 — Lager
98 — Abstützungen
99 — Mutter
100 — Scheibe
101 — Luftauslaßöffnungen
102 — Durchbruch (in 84)
103 — Kragen
104 — Rand (von 81)
105 — Vorsprung (an 30)
106 — Abdeckung (von 30)
107 — Durchbruch
108 — Randbereich (von 91)
109 — Hohlzapfen (an 91)
110 — Lagerstift
111 — Schlitz
112 — L-förmiger Bereich
113 — Schnaupe (von 32)
114 — Nabe (von 88)
115 — Durchbruch (an 36)
116 — Rand (von 115)
117 — Dichtung
118 — Zwischenwand (von 30)
119 — kammerartige Aufnahme
120 — Dichtung (in 119)
121 — Öffnung (in 118)
122 — Spalt
123 — Versteifungsrippe (an 36)
124 — Verbindungsmittel (an 36)
125 — Elektromotor
126 — Spalt (zwischen 49 und 45)
127 — Zwischenraum (zwischen 50 und 46)
128 — Markierung
129 — Pfeil

130 — Rastverbindung

**Patentansprüche**

1. Elektrisch betriebenes Gerät für die Bearbeitung und Zubereitung von Nahrungsmitteln aller Art, mit einem Gehäuse (30) zur Unterbringung des Elektromotors und von zugehörigen Schalt- und Steuereinrichtungen, mit einer vom Elektromotor antreibbaren Arbeitswelle (42), deren oberes Ende in einen beidseitig offenen, hülsenartigen Vorsprung (51) am Boden eines Aufnahmebehälters (32) hineinragt und mit dem eine Isolierhülse (52) fest verbunden ist, die der lösbaren Aufnahme eines Arbeitswerkzeuges dient, mit einem den Aufnahmebehälter verschließbaren Deckel (34), dem eine Sicherheitseinrichtung zugeordnet ist, dadurch gekennzeichnet, daß mit der Isolierhülse (52) abnehmbar ein Adapter (56) auf Mitnahme gekuppelt ist, der wenigstens auf einem Teilbereich seiner Umfangsfläche Gegenkupplungen (60) aufweist und daß dem Adapter (56) eine Mehrzahl von Arbeitswerkzeugen, wie Knetwerkzeug (62), Messer (65), Sahnescheibe (70) od. dgl. zugeordnet ist, die ihrerseits jeweils Kupplungen (61) aufweisen, die mit den Gegenkupplungen (60) zusammenwirken, wenn wahlweise eines der Arbeitswerkzeuge (62, 65, 70) mit dem Adapter (56) lösbar verbunden ist.

2. Elektrisch betriebenes Gerät nach Anspruch 1, dadurch gekennzeichnet, daß die Isolierhülse (52) an ihrer Umfangsfläche liegende Kupplungsvorsprünge (55) aufweist, die mit Gegenkupplungen (58) an der Innenwand eines inneren Teilstückes (57) des Adapters (56) formschlüssig kuppelbar sind.

3. Elektrisch betriebenes Gerät nach Anspruch 1 und 2, dadurch gekennzeichnet, daß in Draufsicht gesehen die Kupplungsvorsprünge (55) der Isolierhülse (52) und die Gegenkupplungen (60) des Adapters (56) eine wellen- oder zahnradförmige, sich zu einem Kreis ergänzende Fläche einschließen, wobei in die Wellentäler bzw. Zahnlücken die Gegenkupplungen (58) des inneren Teilstückes (57) des Adapters (56) bzw. die Kupplungen (61) eines der Arbeitswerkzeuge (62, 65, 70) formschlüssig eingreifen.

4. Elektrisch betriebenes Gerät nach einem oder mehreren der Ansprüche 1 bis 3, dadurch gekennzeichnet, daß die Kupplungsvorsprünge (55), die Gegenkupplungen (60) und die Kupplungen (61) jeweils untereinander gleichgestaltet, in regelmäßiger Anordnung an der Isolierhülse (52) am Adapter (56) und an den Arbeitswerkzeugen (62, 65, 70) angeordnet sind und in Richtung der Längsachsen dieser Teile verlaufen.

5. Elektrisch betriebenes Gerät nach einem oder mehreren der vorangehenden Ansprüche, dadurch gekennzeichnet, daß die Arbeitswerkzeuge (62, 65, 70) jeweils einen mit einem schulterförmigen Absatz des Adapters (56) zusammenwirkenden Auflagerand (69) aufweisen.

6. Elektrisch betriebenes Gerät nach Anspruch 1, dadurch gekennzeichnet, daß der Adapter (56) eine in Richtung des Deckels (34) des Aufnahmebehälters (32) weisende Verlängerung (76) aufweist, deren Umfangsfläche wenigstens bereichsweise mit Gegenkupplungen (80) versehen ist, die entweder unmittelbar mit Kupplungen eines Arbeitswerkzeuges oder mit Kupplungen (83) eines Werkzeugträgers (81) zusammenwirken.

7. Elektrisch betriebenes Gerät nach Anspruch 6, dadurch gekennzeichnet, daß der einstückig ausgebildete Werkzeugträger (81) eine Nabe (82) aufweist, die von einer Bohrung zum Eingriff wenigstens des vorderen Endes der Verlängerung (76) des Adapters (56) durchsetzt ist und an ihren Innenwandungen die Kupplungen (83) aufweist und daß der Werkzeugträger (81) wahlweise eines von mehreren unterschiedlich gestalteten Arbeitswerkzeugen, wie Raspelscheibe, Pommes-Frites-Scheibe od. dgl. aufnimmt.

8. Elektrisch betriebenes Gerät nach Anspruch 6 und 7, dadurch gekennzeichnet, daß der Werkzeugträger (81) einen Rand (104) aufweist, der von einer Verlängerung (85) des Arbeitswerkzeuges (84) untergriffen wird und das das Arbeitswerkzeug (84) einen Durchbruch (102) besitzt, dessen umlaufender Kragen (103) mit dem vorderen freien Ende der Verlängerung (76) des Adapters (56) zusammenwirkt (Fig. 11).

9. Elektrisch betriebenes Gerät nach Anspruch 6, dadurch gekennzeichnet, daß die Verlängerung (76) des Adapters (56) eine nach oben offene Bohrung (79) zum Eingriff des vorderen Endes eines Lagerstiftes (78) aufweist, der seinerseits in einem Lager (77) des Deckels (34) des Aufnahmebehälters (32) untergebracht ist.

10. Elektrisch betriebenes Gerät nach Anspruch 8, dadurch gekennzeichnet, daß das vordere freie Ende der Verlängerung (76) des Adapters (56) als durchmessergleicher Zylinderkörper ausgebildet ist.

11. Elektrisch betriebenes Gerät nach Anspruch 1, dadurch gekennzeichnet, daß die Sicherheitseinrichtung aus einer Verlängerung (86) des Deckels (34) des Aufnahmebehälters (32) besteht, deren eine Verzahnung (87) tragender vorderer Bereich in einen Aufnahmeschlitz (94) des Gehäuses (30) einführbar ist und mit der Verzahnung eines drehbar im Gehäuse (30) gelagerten Schaltrades (88) zusammenwirkt, welches derart ausgebildet ist, daß ein Drehknopf (91) für einen Schalter (92) nur in einer — der Schaltbereitschaftslage — drehbar ist.

12. Elektrisch betriebenes Gerät nach Anspruch 1 und 11, dadurch gekennzeichnet, daß das Schaltrad (88) eine mittlere scheibenförmige Nabe (114) aufweist, deren Umfangsfläche bereichsweise verzahnt ist und daß die Nabe (114) auf ihren beiden Seiten einen rohrförmigen Ansatz (88) trägt, dessen unterer Teil zur drehbaren Lagerung des Schaltrades (88) mit einem Vorsprung (105) des Gehäuses (30) zusammenwirkt, während der obere Teil Schlitze (111) aufweist, in die in der Schaltstellung ein Randbereich (108) des Drehknopfes (91) eingreift.

13. Elektrisch betriebenes Gerät nach Anspruch 12, dadurch gekennzeichnet, daß sich an die Verzahnung der Nabe (114) eine Ausnehmung (95) anschließt, dessen Enden im Zusammenwirken mit einem ortsfesten Anschlag (89) der Begrenzung der Drehbewegung des Schaltrades (88) dienen.

14. Elektrisch betriebenes Gerät nach einem oder mehreren der Ansprüche 11 bis 13, dadurch gekennzeichnet, daß die Verlängerung (86) des Deckels (34) außer der Verzahnung (87) einen im Querschnitt L-förmigen Bereich aufweist, dessen vorspringender Schenkel in der Sperrlage des Deckels (34) unter die Schnaupe (113) des Aufnahmebehälters (32) greift.

## Claims

1. An electrically operated appliance for processing and preparing foods of all kinds, comprising a housing (30) for accommodating the electric motor and associated switching and control means, a working shaft (42) which is drivable by the electric motor and the upper end of which projects into a sleeve-like projection (51) which is open at both ends at the bottom of a receiving container (32) and to which there is fixedly connected an insulating sleeve (52) which serves for releasably accommodating a working tool, and comprising a cover (34) which can close the receiving container and with which a safety means is associated, characterised in that an adaptor (56) is removably coupled in entrainment relationship to the insulating sleeve (52), which adaptor has countercoupling means (60) at least on a portion of its circumferential surface, and that associated with the adaptor (56) is a plurality of working tools such as a kneading tool (62), a blade (65), a cream disc (70) or the like, which in turn each have coupling means (61) which cooperate with the counter-coupling means (60) when one of the working tools (62, 65, 70) is selectively releasably connected to the adaptor (56).

2. An electrically operated appliance according to claim 1 characterised in that the insulating sleeve (52) is provided at its circumferential surface with coupling projections (55) which can be positively coupled to counter-coupling means (58) at the inside wall of an inner portion (57) of the adaptor (56).

3. An electrically operated appliance according to claim 1 and claim 2 characterised in that as viewed in plan the coupling projections (55) on the insulating sleeve (52) and the counter-coupling means (60) of the adaptor (56) enclose an area which is of a wave-like configuration or a gear-like configuration and which makes up a circle, wherein positively engaging into the troughs of the wave configuration or the gaps between the teeth are the counter-coupling means (58) of the inner portion (57) of the adaptor (56) and the coupling means (61) of one of the working tools (62, 65, 70) respectively.

4. An electrically operated appliance according to one or more of claims 1 to 3 characterised in that the coupling projections (55), the counter-coupling means (60) and the coupling means (61) are each of the same configuration as each other, are arranged in a regular arrangement on the insulating sleeve (52), the adaptor (56) and the working tools (62, 65, 70) and extend in the direction of the longitudinal axes of said members.

5. An electrically operated appliance according to one or more of the preceding claims characterised in that the working tools (62, 65, 70) each have a respective contact edge (69) co-operating with a shoulder-like step on the adaptor (56).

6. An electrically operated appliance according to claim 1 characterised in that the adaptor (56) has an extension portion (76) which goes in the direction of the cover (34) of the receiving container (32) and the circumferential surface of which is provided at least in a regionwise manner with counter-coupling means (80) which co-operate either directly with coupling means of a working tool or with coupling means (83) of a tool carrier (81).

7. An electrically operated appliance according to claim 6 characterised in that the tool carrier (81) which is made in one piece has a hub (82) through which passes a bore for engagement at least of the front end of the extension portion (76) of the adaptor (56) and which has the coupling means (83) at its inside walls and that the tool carrier (81) selectively accommodates one of a plurality of working tools of different configurations such as a grater disc, a disc for making French fried potatoes, or the like.

8. An electrically operated appliance according to claim 6 and claim 7 characterised in that the tool carrier (81) has an edge (104) under which engages an extension portion (85) of the working tool (84) and that the working tool (84) has an aperture (102) therethrough, a collar (103) which extends around said aperture (102) co-operating with the front free end of the extension portion (76) of the adaptor (56) (Figure 11).

9. An electrically operated appliance according to claim 6 characterised in that the extension portion (76) of the adaptor (56) has an upwardly open bore (79) for engagement therein of the front end of a mounting pin (78) which in turn is disposed in a mounting (77) on the cover (34) of the receiving container (32).

10. An electrically operated appliance according to claim 8 characterised in that the front free end of the extension portion (76) of the adaptor (56) is in the form of a cylindrical body of the same diameter.

11. An electrically operated appliance according to claim 1 characterised in that the safety means comprises an extension portion (86) on the cover (34) of the receiving container (32), the front region of which extension portion, that carries a tooth configuration (87), can be inserted into a receiving slot (94) in the housing (30) and co-operates with the teeth of a switching wheel (88) which is mounted rotatably in the housing (30) an which is of such a configuration that a rotary knob (91) for a switch (92) can be turned only in one position, the switching readiness position.

12. An electrically operated appliance according to claim 1 and claim 11 characterised in that the switching wheel (88) has a central disc-like hub (114) whose circumferential surface is provided with teeth in a region-wise manner and that the hub (114) carries on its two sides a tubular projection (88), the lower portion of which co-operates with a projection (105) on the housing (30) for rotatably mounting the switching wheel (88) while the upper portion has slots (111) into which an edge region (108) of the rotary knob (91) engages in the switching position.

13. An electrically operated appliance according to claim 12 characterised in that adjoining the tooth configuration on the hub (114) is a recess (95), the ends of which, in co-operation with a stationary stop (89), serve to restrict the rotary movement of the switching wheel (88).

14. An electrically operated appliance according to one or more of claims 11 to 13 characterised in that the extension portion (86) on the cover (34), besides the tooth configuration (87), has a region of L-shaped cross-section, the projecting linb of which engages under the spout (113) of the receiving container (32) in the locking position of the cover (34).

**Revendications**

1. Appareil à commande électrique pour traiter et préparer des aliments de tout genre, comportant un boîtier (30) renfermant un moteur électrique et les dispositifs de commutation et de commande associés, un arbre d'entraînement (42) entraîné par le moteur électrique et dont l'extrémité supérieure pénètre dans une saillie (51) en forme de douille ouverte à ses deux extrémités et disposée sur le fond d'un récipient récepteur (32), ladite saillie étant liée rigidement à une douille isolante (52) susceptible de recevoir un outil, ainsi qu'un couvercle (34) fermant ledit récipient récepteur et associé à un dispositif de sécurité, caractérisé en ce que la douille isolante est accouplée de manière amovible à un adaptateur (56) en vue d'un effet d'entraînement, ledit adaptateur présentant sur au moins une partie de sa surface périphérique des éléments d'accouplement complémentaires (60), et en ce que l'adaptateur (56) est associé à une pluralité d'outils, tels que des outils de pétrissage (62), couteaux (65), fouets (70) et analogues qui présentent également des éléments d'accouplement (61) coopérant avec lesdits éléments d'accouplement complémentaires (60) lorsque l'un quelconque desdits outils (62, 65, 70) est lié sélectivement de manière amovible audit adaptateur (56).

2. Appareil à commande électrique selon la revendication 1, caractérisé en ce que la surface périphérie de ladite douille isolante (52) comporte des aspérités d'accouplement (55) susceptibles d'être accouplées avec conjugaison de formes à des éléments d'accouplement complémentaires (58) disposés sur la paroi intérieure d'une partie interne (57) de l'adaptateur (56).

3. Appareil à commande électrique selon les revendications 1 et 2, caractérisé en ce que, vues en plan les aspérités d'accouplement (55) de la douille isolante (52) et les éléments d'accouplement complémentaires (60) de l'adaptateur (56) définissent une surface ondulée ou en forme de roue dentée qui se referme de manière à former un cercle, cependant que les creux des ondulations ou les creux de dents des éléments d'accouplement complémentaires (58) de la partie interne (57) de l'adaptateur (56) reçoivent avec conjugaison de formes les éléments d'accouplement complémentaires (58) de ladite partie interne (57) de l'adaptateur (56) ou les éléments d'accouplement (61) de l'un des outils (62, 65, 70).

4. Appareil à commande électrique selon une ou plusieurs des revendications 1 à 3, caractérisé en ce que les aspérités d'accouplement (55), les éléments d'accouplement complémentaires (60) et les éléments d'accouplement (61) présentent des configurations identiques et sont disposés de manière régulière sur la douille isolante (52), sur l'adaptateur (56) et sur les outils (62, 65, 70), tout en étant orientés selon la direction des axes longitudinaux respectifs de ces organes.

5. Appareil à commande électrique selon une ou plusieurs des revendications précédentes, caractérisé en ce que les outils (62, 65, 70) comportent chacun un rebord d'appui (69) coopérant avec un épaulement de l'adaptateur (56).

6. Appareil à commande électrique selon la revendication 1, caractérisé en ce que l'adaptateur (56) comporte un prolongement (76) dirigé vers le couvercle (34) dudit récipient récepteur (32) et pourvu sur au moins une partie de sa surface périphérique d'éléments d'accouplement complémentaires (80) coopérant, soit directement avec les éléments d'accouplement d'un outil, soit avec les éléments d'accouplement (83) d'un porte-outils (1).

7. Appareil à commande électrique selon la revendication 6, caractérisé en ce que le porte-outils (81) est formé d'une seule pièce et comporte un moyeu (82) pourvu d'un alésage appelé à recevoir au moins l'extrémité avant dudit prolongement (76) de l'adaptateur (56), ledit alésage étant pourvu, sur sa surface intérieure, d'éléments d'accouplement (83) et en ce que ledit porte-outils (81) est susceptible de recevoir sélectivement l'un d'une pluralité d'outils de configurations différentes, tels que disque râpeur, disque coupe-frites et analogues.

8. Appareil à commande électrique selon les revendications 6 et 7, caractérisé en ce que ledit porte-outils (81) présente un rebord (104) sur lequel un prolongement (85) de l'outil (84) vient se placer, et en ce que l'outil (84) présente un évidement (102) dont un col circonférentiel (103) coopère avec l'extrémité avant libre du prolongement précité (76) de l'adaptateur (56) (figure 11).

9. Appareil à commande électrique selon la revendication 6, caractérisé en ce que le prolongement (76) de l'adaptateur (56) présente un alésage (79) ouvert vers le haut et appelé à recevoir l'extrémité avant d'une broche de palier (78) disposée dans un palier (77) du couvercle (34) dudit récipient récepteur (32).

10. Appareil à commande électrique selon la revendication 8, caractérisé en ce que l'extrémité avant libre du prolongement (76) de l'adaptateur (56) présente la forme d'un corps cylindrique de même diamètre.

11. Appareil à commande électrique selon la revendication 1, caractérisé en ce que le dispositif de sécurité comporte un prolongement (86) du couvercle (34) du récipient récepteur (32), une partie avant du prolongement précité (86) étant pourvue d'une denture (87) et susceptible d'être introduite dans une fente réceptrice (94) du boîtier (30), de manière à coopérer avec la denture d'une roue à rochet (88) montée à rotation dans le boîtier (30), ladite roue à rochet étant agencée de façon telle qu'un bouton rotatif (91) associé à un commutateur (92) ne puisse être tourné que dans une position déterminée, à savoir la position de disponibilité de commutation.

12. Appareil à commande électrique selon les revendications 1 et 11, caractérisé en ce que la roue à rochet (88) comporte un moyeu central (114) en forme de disque présentant une denture sur une partie de sa surface périphérique, et en ce que le moyeu (114) comporte sur ces deux côtés un appendice tubulaire (90) dont la partie inférieure coopère avec une saillie (105) du boîtier (30) en vue du montage à rotation de ladite roue rochet (88), cependant que la partie supérieure présente des rainures (111) dans lesquelles s'engage une pente marginale (108) du bouton tournant (91) dans la position de commutation.

13. Appareil à commande électrique selon la revendication 12, caractérisé en ce que la denture du moyeu (114) est suivie d'un évidement (95) dont les extrémités coopèrent avec une butée fixe (89) pour limiter l'amplitude des déplacements de rotation de la roue à rochet (88).

14. Appareil à commande électrique selon une ou plusieurs des revendications 11 à 13, caractérisé en ce que le prolongement (86) du couvercle (34) présente, en plus de la denture (87), une zone à section en forme de L dont la branche saillante s'engage sous le rebord (113) du récipient récepteur (32) lorsque le couvercle (34) est en position de blocage.

EP 0 158 032 B1

FIG.2

93

128

106

91

XVII

XVII

86

34

34

35

FIG.1

91

51

98

32

33

30

36

49

50

37

42

98

96

38

39

40

31

FIG.5

FIG.6

FIG.4

FIG.9

FIG.10

FIG.8

FIG.7

EP 0 158 032 B1

FIG.11

FIG.12

FIG.13

FIG.14

FIG.15

FIG.16

EP 0 158 032 B1

EP 0 158 032 B1

FIG.17

FIG.18

FIG.19

FIG.20

FIG.3